# EUROPÄISCHE PATENTSCHRIFT

(11) **EP 0 904 495 B1**
(45) Veröffentlichungstag und Bekanntmachung des Hinweises auf die Patenterteilung: **04.06.2003**
(21) Anmeldenummer: 98919169.7
(22) Anmeldetag: 27.03.1998
(51) Int. Cl.: F15B 13/044, G05D 16/20

(54) **VENTILEINRICHTUNG, INSBESONDERE KOMBINIERTE PROPORTIONAL-WEGEVENTILEINRICHTUNG**
VALVE DEVICE, ESPECIALLY A COMBINED PROPORTIONAL-DISTRIBUTING VALVE DEVICE
DISPOSITIF A SOUPAPE, EN PARTICULIER DISPOSITIF COMBINE VALVE PROPORTIONNELLE-DISTRIBUTEUR

(30) Priorität: 02.04.1997 DE 29705635 U; 09.05.1997 DE 19719557
(43) Veröffentlichungstag der Anmeldung: 31.03.1999
(73) Patentinhaber: Voith Turbo GmbH & Co. KG, 89522 Heidenheim (DE)
(72) Erfinder: NITSCHE, Martin, D-89547 Gerstetten (DE)
(74) Vertreter: Dr. Weitzel & Partner
(86) Internationale Anmeldenummer: EP9801810
(87) Internationale Veröffentlichungsnummer: WO98044266

(56) Entgegenhaltungen:
- EP-A- 0 331 958
- EP-A- 0 565 982
- DE-A- 2 429 852
- DE-A- 3 844 412
- DE-A- 19 631 803

## Beschreibung

Die Erfindung betrifft eine Ventileinrichtung, insbesondere eine Kombination der Funktionen eines Proportional- und eines Wegeventiles, im einzelnen mit den Merkmalen aus dem Oberbegriff des Anspruchs 1.

Proportionalventile, auch Stetigventile genannt, sowie Wegeventile sind in einer Vielzahl von Ausführungen und für unterschiedliche Einsatzzwecke bekannt. Bei Wegeventilen handelt es sich dabei um Richtungsventile, deren Ventilkolben, welche auch als Steuerkolben bezeichnet werden, in verschiedene festgelegte Schaltstellungen gebracht werden können, wodurch unterschiedliche Verbindungen, d.h. Wege, der angeschlossenen Leitungen zur Betriebsmittelführung hergestellt werden können. Damit wird eine Änderung der Durchflußrichtung eines Volumenstromes bewirkt. Diese Ventile werden durch die Nennweite, den Nenndruck und die möglichen Wegevarianten gekennzeichnet. Die Hauptbaugruppe eines Wegeventils bildet dabei die Steuereinheit. Diese enthält in einem Ventil- bzw. Steuergehäuse den Ventilkolben, der die Richtungsänderungen des Volumenstroms bewirkt. Zur Betätigung des Ventilkolbens ist diesem an wenigstens einer der beiden Stirnseiten eine Stelleinrichtung zum Aufbringen der Betätigungskraft zugeordnet. Eine häufig eingesetzte Variante ist dabei das sogenannte Schieberventil, wobei der Ventilschluß durch Überdeckung, hervorgerufen durch das Auf- oder Ineinandergleiten der einzelnen Ventilteile, insbesondere des Ventilkolbens im Ventilgehäuse, hervorgerufen wird. Je nach Bau- und Bewegungsart der Ventilkolben werden diese Ventile in Drehschieberventile, Längsschieberventile und Längsdrehschieberventile eingeteilt. Eine entsprechende Klassifizierung der Steuer- bzw. Ventileinheiten erfolgt immer nach der Anzahl der Anschlüsse, d.h. der möglichen Leitungen, und nach der Anzahl der möglichen Schaltstellungen.

Besonderen Einfluß auf die Genauigkeit der Schaltvorgänge haben die Steuerkanten des Ventilkolbens und die des Ventilgehäuses. Sie beeinflussen die Drosselung des Durchgangsquerschnittes und damit die Geschwindigkeit des Verbrauchers, in der Regel ein Arbeitsgerät. Durch entsprechende Formgebungen dieser Steuerkanten lassen sich durch Relativbewegung des Ventilkolbens gegenüber dem Ventilgehäuse unterschiedliche Durchflußcharakteristiken erzielen. Wegeventile weisen dabei eine bestimmte Anzahl von Schaltstellungen auf.

Als Proportionalwegeventil werden stetig verstellbare, vorzugsweise elektrisch stetig verstellbare Wegeventile bezeichnet, bei denen die Axialbewegung des Ventilkolbens direkt durch Lage geregelte oder durch Kraft gesteuerte, druckdichte Stelleinrichtungen proportional einem Sollwert erfolgt. Bei elektrisch stetig verstellbaren Wegeventilen sind die Stelleinrichtungen in Form von Steuermagneten ausgeführt, welche eine Axialbewegung des Ventilkolbens proportional zu einem elektrischen Sollwert ermöglichen. Der Ventilkolben kann in dem Ventilgehäuse stufenlos jede Stellung zwischen den zwei Endlagen beliebig lange einnehmen. Dies bringt besondere Vorteile bei der Steuerung und Regelung der Geschwindigkeit von hydraulischen Verbrauchern. Derartige Ventile sind beispielsweise
1) aus den Prospekten Mannesmann Rexrodt:
   RD 29 586/09.89
   RD 29 175/03.93 und
2) dem Prospekt der Herion-Werke KG - Fluidtechnik Nr. 7502263.0503.92 bekannt.

Die derartig gestalteten Proportionalventile haben den Nachteil, daß die Betätigungskraft, welche beispielsweise elektromagnetisch, hydraulisch, mechanisch oder anderweitig aufgebracht werden kann, so gewählt werden muß, daß der maximal auftretende gewünschte Druck im dem Ventil nachgeordneten Verbraucher dauerhaft gehalten werden kann. Die Größe der Wirkfläche des Druckes bestimmt sich dabei aus dieser Forderung. Dies hat jedoch zur Folge, daß kleinere Drücke mit dementsprechend kleineren Betätigungskräften gesteuert werden müssen. Bei gewünschten kleineren Drücken müssen somit bei der Steuerung größere Druckstreuungen in Kauf genommen werden. Eine Vergrößerung des Bereiches der aufbringbaren Kraft hat in der Regel eine Vergrößerung der Stelleinrichtungen zur Folge, beispielsweise hat bei einer Ausführung einer Stelleinrichtung in Form eines Elektromagneten eine grundsätzliche Erhöhung der aufzubringenden Magnetkraft eine Vergrößerung der Magnetspule zur Folge, was jedoch einen erhöhten Platzbedarf bedingt. Des weiteren sind die Kosten größerer elektrischer Leiter höher und der Stromverbrauch nimmt zu. Im allgemeinen sind hinsichtlich des Anwendungfalles auch Grenzen für die Größe der Ventileinrichtung und der Stelleinrichtung gesetzt, so daß eine genaue Einstellung des Druckes am Verbraucher nicht immer'zu realisieren ist.

Der Erfindung liegt daher die Aufgabe zugrunde, eine Ventileinrichtung der eingangs genannten Art derart weiterzuentwickeln, daß die genannten Nachteile vermieden werden. Insbesondere sollen die Druckstreuungen bei möglichst geringen einzustellenden Drücken vermieden werden. Die Ventileinrichtung soll des weiteren für Einsatzfälle, an welche Anforderungen beispielsweise wie in einem Schaftgetriebe gestellt werden, bei welchen relativ geringe Drücke in einem Schaltelement möglichst genau gesteuert werden sollen, andererseits aber durch hohe Momente im Wandlerbetrieb eine hohe Übertragungsfähigkeit der Schaltelemente notwendig ist, geeignet sein. Die Ventileinrichtung soll dabei wenigstens in einem ersten Druckbereich (dem Proportionalbereich), welcher auch den Gesamtarbeitsbereich entsprechen kann, beispielsweise einer Größenordnung von 1 bis 5 bar, möglichst genau, d.h. unter Ausnutzung der maximal zulässigen Betätigungskraft, mit möglichst großen Betätigungskräften proportional einer elektrischen Stromstärke gesteuert werden können. Zusätzlich sollte das Ventil in einem zweiten höheren Druckbereich, beispielsweise von 6 bis 20 bar, dann als normales Wegeventil arbeiten, d.h unabhängig vom vorhandenen Druckniveau im Verbraucher immer den vollen Druck übertragen. Die Ventileinrichtung soll möglichst exakt reproduzierbare Schaltvorgänge mit möglichst geringen Einflüssen von hydraulischen Klemmkräften und mechanischer Reibung ermöglichen können. Der konstruktive Aufwand und die Kosten sind dabei gering zu halten.

Die erfindungsgemäße Lösung ist durch die Merkmale des Anspruchs 1 gekennzeichnet. Vorteilhafte Ausgestaltungen sind in den Unteransprüchen beschrieben.

Die Ventileinrichtung umfaßt neben einem Ventilgehäuse mit wenigstens einem Zulaufkanal und einem Ablaufkanal, einen, im Ventilgehäuse axial bewegbaren und Steuerkanten aufweisenden Ventilkolben zum Freigeben und Absperren der Verbindung der Querschnitte von Zulauf- und Ablaufkanal sowie eine Stelleinrichtung zur Beaufschlagung des Ventilkolbens mit einer Betätigungskraft. Erfindungsgemäß sind Mittel zur Erzeugung einer der Betätigungskraft über wenigstens einen Teil des Gesamtarbeitsbereiches der Ventileinrichtung in Abhängigkeit zum Druck im Ablaufkanal entgegengerichtete Kraft vorgesehen. In einem Druckbereich, welcher einen ersten Teil eines Gesamtarbeitsbereiches der Ventileinrichtung bestimmt, wobei dieser erste Teil auch dem Gesamtarbeitsbereich entsprechen kann, wird somit der mögliche Betätigungskraftbereich gegenüber dem Druckbereich am Verbraucher vergrößert, so daß eine feinfühligere Abstimmung zwischen dem einzustellenden Druck am Verbraucher und der Betätigungskraft möglich wird, d.h. einem bestimmten Druckbereich am Verbraucher bzw. im Ablaufkanal ist ein größerer Betätigungskraftbereich gegenüber einem konventionell ausgeführten Proportionalventil zuordenbar. Dies wird nach Verbringen des Ventilkolbens in eine Steuerposition durch die Schaffung eines Gleichgewichtes zwischen der Betätigungskraft und einer Druckkraft, welche in Abhängigkeit des Druckes im Verbraucher auf eine bestimmte Fläche wirkt, die der Betätigungskraft entgegengesetzt gerichtet ist, erzielt.

Die Mittel umfassen dazu vorzugsweise einen, im Ventilkolben angeordneten und sich bis zu der von der Stelleinrichtung abgewandten Stirnseite erstreckenden Innenraum, einen im Innenraum angeordneten Ventilstift, wobei Ventilstift und Ventilkolben relativ gegeneinander bewegbar sind, einen, dem Ventilstift zugeordneten Anschlag, an welchem sich der Ventilstift abstützt, sowie einen Verbindungkanal zwischen dem Innenraum des Ventilkolbens und dem äußeren Umfang des Ventilkolbens, wobei die Mündung des Verbindungskanales am äußeren Umfang des Ventilkolbens derart angeordnet ist, daß dieser im genannten Teil des Gesamtarbeitsbereiches, dem Proportionalbereich mit dem Ablaufkanal korrespondiert.

Diese Ausführung ermöglicht es, das Verhältnis von Betätigungskräften zu Reibungskräften möglichst groß zu wählen. Die Reibungskräfte bestimmen sich hauptsächlich aus den Druckdifferenzen am Ventil, der Betriebsmittelverschmutzung, dem Ventildurchmesser oder sonstigen konstruktiven Merkmalen. Die Betätigungskräfte finden ihre Begrenzung hauptsächlich in der Größe der Stelleinheiten, insbesondere bei einem elektromagnetischen Antrieb in der Größe des Elektromagneten. Auch für geringe Bereiche der aufzubringenden Betätigungskräfte können geringe Druckwerte am Verbraucher bzw. dem mit dem Verbraucher gekoppelten Ablaufkanal eingestellt werden.

Das erfindungsgemäß gestaltete Ventil wird vorzugsweise als kombinierte Proportional-Wegeventileinrichtung ausgeführt. Zur zusätzlichen Realisierung der Wegefunktion umfaßt die Ventileinrichtung des weiteren eine Einrichtung, welche die Größe der der Betätigungskraft entgegengerichteten Kraft begrenzt und kompensiert. Diese Einrichtung ist in Form einer Energiespeichereinheit ausgeführt, welche dem Anschlag für den Ventilstift zugeordnet ist und dessen Abstützkraft für den Ventilstift hinsichtlich der Größe beschränkt. Überschreitet die Druckkraft, welche aus dem Druck in der Ablaufleitung und der Stiftfläche bestimmt wird, die durch die Energiespeichereinheit aufbringbare Gegenkraft zur Abstützung des Ventilstiftes, fungiert der Anschlag nicht mehr als fester Anschlag sondern wird unter Krafteinwirkung durch den Ventilstift verschoben. Diese Verschiebung wird durch einen weiteren Anschlag zwischen Ventilstift und Ventilkolben begrenzt. Nach Erzielen der Anschlagsposition des Ventilstiftes gegenüberdem Ventilkolben, d.h. der Ventilstift ist nicht mehr gegenüber dem Ventilkolben in Richtung der Druckkraft verschiebbar, wird der Ventilkolben dann nur noch entsprechend der aufgebrachten Betätigungskraft verschoben.

Erfindungsgemäß wird somit bei der Ventileinrichtung, wenigstens ein erster unterer Druckbereich am Verbraucher, welcher einen ersten Teil des Gesamtarbeitsbereiches der Ventileinrichtung bestimmt, mit annähernd maximal möglichen Betätigungskräften gesteuert, während in einem oberen Druckbereich, welcher einen weiteren zweiten Teil des Gesamtarbeitsbereiches der Ventileinrichtung bestimmt, das Ventil als reines Wegeventil fungiert. Dies bedeutet für den zweiten Teil des Gesamtarbeitsbereiches, daß der im Ablaufkanal, welcher wenigstens mittelbar mit dem Verbraucher gekoppelt ist, herrschende Druck keinerlei Einfluß mehr auf die Funktion der Ventileinrichtung ausübt. Dadurch können trotz kleiner Stellgrößen präzisere Steuervorgänge im ersten Teil des Gesamtarbeitsbereiches der Ventileinrichtung, d.h. dem unteren Druckbereich ermöglicht werden. Das Umschalten der Ventileinrichtung von der Proportionalfunktion auf die Wegefunktion geschieht automatisch als Funktion des Druckes im Verbraucher. Durch entsprechende geometrische und kraftmäßige Auslegung der Ventileinrichtung kann der Umschaltpunkt festgelegt werden.

Vorrichtungsmäßig weist dazu die Ventileinrichtung wenigstens ein Ventilgehäuse auf, welches eine zentrale Bohrung umfaßt, in der ein Ventilkolben in axialer Richtung bewegbar ist. Die zentrale Bohrung bildet mit dieser zugeordnete Kammer sogenannte Druckräume, welche entsprechend der Stellung des Ventilkolbens in der zentralen Bohrung eine Verbindung zwischen einer Zulaufleitung und einer Ablaufleitung, vorzugsweise der Ablaufleitung, welche mit einem Verbraucher gekoppelt ist, ermöglicht. Der Ventilkolben weist des weiteren einen Innenraum auf, in welchem ein sogenannter Ventilstift axial bewegbar angeordnet ist. Dem Ventilstift ist in Bewegungsrichtung ein Anschlag zugeordnet, welcher an einer Energiespeichereinheit abgestützt wird. Der Ventilstift bzw. dessen vom Anschlag weggewandte Stirnseite, die in den Innenraum des Ventilkolbens hineinragt, ist über einen Verbindungskanal, vorzugsweise in Form einer Verbindungsbohrung, vom Innenraum des Ventilkolbens bis zum äußeren Umfang des Ventilkolbens, der sich im Proportionalarbeitsbereich im Bereich des Ablaufes befindet, mit dem Druck in der Ablaufleitung, d.h. der Verbindungsleitung zum Verbraucher, beaufschlagt. Das Ventil ist derart konzipiert, daß in einer ersten Endstellung die Verbindung zwischen dem Zulauf und dem Ablauf, d.h. der Verbindungsleitung zum Verbraucher, gesperrt ist.

Eine Verstellbarkeit des Ventilkolbens im Ventilgehäuse erfolgt mittels einer Stelleinrichtung. Diese Stelleinrichtung ist vorzugsweise in Form einer elektromagnetischen Stelleinrichtung, d.h. eines Elektromagneten, ausgeführt. Andere Möglichkeiten sind ebenfalls denkbar, beispielsweise eine elektrohydraulische oder eine mechanische Verstelleinrichtung. Bei gewünschter stufenloser Verstellung wird von seiten der Stelleinrichtung der Ventilkolben mit einer Betätigungskraft F_{Betätigung} beaufschlagt. Dabei wird eine Verbindung zwischen den Druckräumen, die von der mit der zentralen Bohrung verbundenen Kammer und dem Einlauf sowie der zentralen Bohrung und einer Kammer am Ablauf gebildet werden, hergestellt. Das Betriebsmittel kann somit vom Zulauf zum Verbraucher abfließen. Gleichzeitig stellt sich über die Verbindungsbohrung zwischen Innenraum und äußerem Umfang des Ventilkolbens bei Position im Bereich des Ablaufes ein Druck ein, der auf die Stirnfläche des Ventilstiftes wirkt und am Anschlag im Ventilgehäuse abgestützt wird. Dabei wird ein Gleichgewichtszustand hergestellt, das bedeutet die Betätigungskraft entspricht der Druckkraft, welche sich aus Verbraucherdruck auf die Ventilstiftfläche ergibt. Bei Vorsehung einer weiteren Energiespeichereinheit zwischen Ventilkolben und Ventilstift im Innenraum des Ventilkolbens summiert sich die dadurch aufgebrachte Kraft mit der Druckkraft.

Der Ventilstift stützt sich an der dem Anschlag zugeordneten Energiespeichereinheit ab. Die von der Energiespeichereinheit aufgebrachte Kraft entspricht dabei vorzugsweise der Kraft des Ventilstiftes bei maximal gewünschtem proportionalen Druck, so daß im gesamten Proportionalbereich keine Veränderung der Kraft der Energiespeichereinheit bzw. der Lage des Anschlages stattfindet. Als unmittelbare Stellgröße für den einzustellenden maximal gewünschten proportionalen Druck ergibt sich somit die Vorspannkraft durch die Energiespeichereinheit. Erst wenn der eingesteuerte Druck im Verbraucher, d.h. im Ablauf, im Innenraum eine Kraft auf den Ventilstift erzeugt, welche höher ist als die der dem Anschlag zugeordneten Energiespeichereinheit, drückt der Ventilstift die Energiespeichereinheit zusammen, bis er mit wenigstens einem, an seinem Umfang ausgebildeten Vorsprung am Anschlag am Ventilkolben zur Anlage kommt. Sobald dieser Zustand erreicht wird, kann sich der Druck im Verbraucher nicht mehr auf das Ventil auswirken. Die Lage des Ventilkolbens bestimmt sich dann nur noch allein aufgrund der äußeren Kräfte von Stelleinheit und Energiespeichereinheit wie bei einem Wegeventil.

Für den Einsatz einer erfindungsgemäßen Ventileinrichtung mit beiden Funktionen - Proportional- und Wegefunktion - in einem Automatgegetriebe kann der Schaltdruck dabei derart ausgelegt werden, daß beispielsweise alle Schaltvorgänge im proportionalen Bereich liegen und der obere Druckbereich lediglich der Momentenübertragung dient.

Wesentliche Vorteile einer derartig gestalteten Ventileinrichtung bestehen darin, daß neben einer feinstufigeren Druckeinstellung eine universelle Verwendung ermöglicht werden kann, wobei mehrere Anforderungen mit optimaler Baugröße von einer Ventileinrichtung erfüllt werden können. Dies wären eine feinstufige Abstimmung von Betätigungskräften und Enddruck am Verbraucher bei geringer Größe des Druckes und die Bereitstellung und sicheres Halten eines hohen Druckes am Verbraucher.

Die Energiespeichereinheiten sind vorzugsweise in Form von Druckspeichereinheiten, beispielsweise einezelnen Druckfedern oder Federpaketen ausgeführt. Denkbar ist auch die Verwendung elastischer Membranen.

Die Ventileinrichtung kann unter Verzicht auf die Energiespeichereinheit am Anschlag als reines Proportionalventil betrieben werden oder aber bei Auslegung der Energiespeichereinheit derart, daß die Betätigungskraft sofort zum Verschieben des Ventilkolbens in eine Endlage führt, was bei einer geringen Vorspannkraft der Energiespeichereinheit ermöglicht wird, als reines Wegeventil betrieben werden. Eine geringe Vorspannkraft der Energiespeichereinheit ergibt einen kleinen Proportionalbereich, eine große Vorpannkraft der Energiespeichereinheit ergibt einen großen Proportionalbereich. Dies ermöglicht es, eine kompakte Ventilgrundbaueinheit gemäß Anspruch 11 zu schaffen, welche durch geringfügige Modifikationen mühelos an unterschiedliche Anforderungan angepaßt werden kann, wobei die einzelnen Komponenten auch als Austauschkomponeten ausgeführt werden können.

Die erfindungsgemäß gestaltete Ventileinrichtung kann jede Art von Stelleinrichtung umfassen, d.h. der Einsatz elektromagnetisch, mechanisch, hydraulisch oder anderweitig betreibbarer Stelleinrichtungen ist denkbar.

Elektromagnetische Stelleinrichtungen umfassen wenigstens einen Elektromagneten mit einer Spule und einem Anker.

Unter einem weiteren Aspekt der Erfindung ist bei elektro-magnetischer Aufbringung der Betätigungskraft vorgesehen, den einzelnen Funktionszuständen "Proportionalventil" und "Wegeventil" unterschiedliche Wegbegrenzungen des Ventilkolbens bzw. des Magnetankers zuzuordnen. Damit kann die Bestromung der Magnetspule im Zustand Wegeventil verringert werden, was sich als besonders vorteilhaft erweist, insbesodere da dieser Zustand den größten Zeitanteil beansprucht und somit für die Erwärmung und Haltbarkeit der Spule sowie die Hardware der Steuerung die größte Bedeutung besitzt. Der mögliche Hub im Proportionalbereich beträgt ungefähr ca. 80 % bezogen auf den Gesamthub. Geringfügige Abweichungen sind denkbar.

Die erfindungsgemäße Lösung ist nachfolgend anhand von Figuren erläutert. Darin ist folgendes dargestellt:
- Fig. 1a und 1b: verdeutlichen anhand einer Darstellung in zwei Betriebszuständen eine erfindungsgemäße Ausführung einer Ventileinrichtung;
- Fig. 2: zeigt im Vergleich die Kennlinienen eines konventionellen Proportionalventiles und eines erfindungsgemäß gestalteten kombinierten Proportional- Wegeventiles anhand eines Diagrammes für die Abhängigkeit des einzustellenden Druckes im Verbraucher von der Größe der Magnetkraft;
- Fig. 3: verdeutlicht in einem Diagramm den Zusammenhang zwischen Magnetkraft und Ventilkolben- bzw. Magnetspulenweg;
- Fig. 4: verdeutlicht in einem Diagramm die erforderliche Bestromung für die Funktionen "Proportionalventil" und "Wegeventil".

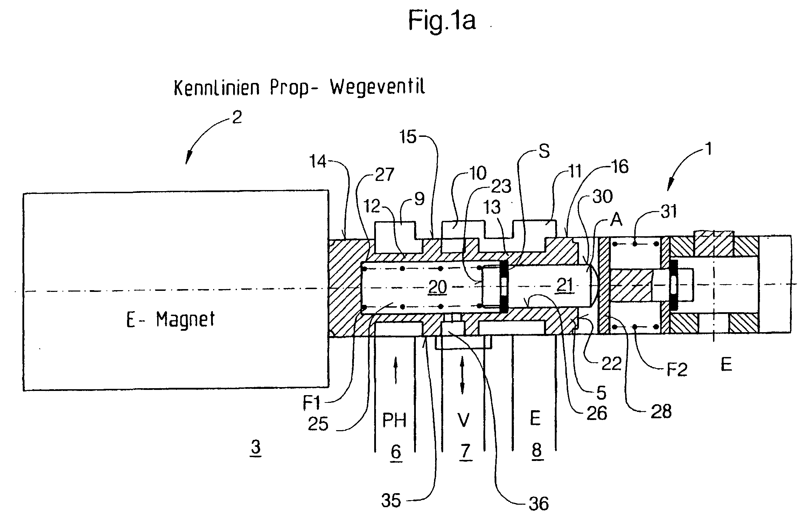

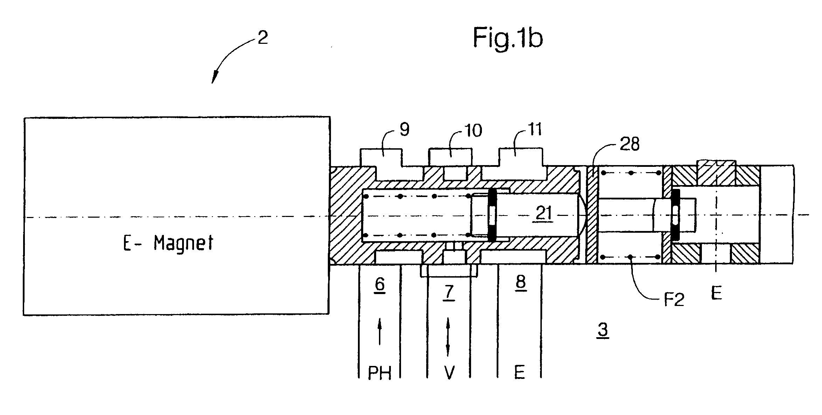

Die Figur 1 verdeutlicht in vereinfachter Darstellung anhand eines Ausschnittes aus einer Ventileinrichtung den Aufbau und die Funktionsweise eines erfindungsgemäß gestalteten Proportional-Wegeventils 1. Dieses wird in einer bevorzugten Ausführung elektromagnetisch angesteuert. Zu diesem Zweck ist ein Elektromagnet 2 vorgesehen. Das Proportional-Wegeventil 1 umfaßt einen Ventilkörper 3, welcher eine zentrale Bohrung 4 umfaßt, in welcher ein Ventilkolben 5 in axialer Richtung bewegbar angeordnet ist. Der zentralen Bohrung 4 sind eine Vielzahl von Anschlüssen, mindestens jedoch zwei, zugeordnet. Dieses sind hier in Form von Verbindungskanälen 6, 7 und 8 dargestellt, welche sich vom äußeren Umfang des Ventilkolbens 5 vorzugsweise in radialer Richtung bis zur zentralen Bohrung 4 erstrecken. Dabei fungiert der Verbindungskanal 6 als Zulaufkanal und der Verbindungskanal 7 als Ablaufkanal. Die Verbindungskanäle 6, 7 und 8 münden in die zentrale Bohrung 4, welche im Bereich der Kanäle zusätzliche Kammern, hier 9, 10 und 11, aufweist, die mit der zentralen Bohrung 4 verbunden sind, sich in Umfangsrichtung erstrecken und einen größeren Durchmesser D als die zentrale Bohrung 4 aufweisen. Diese in das Ventilgehäuse 3 eingearbeiteten Kammern 9, 10 und 11 bilden mit der zentralen Bohrung 4 die Steuerkanten des Ventilgehäuses 3.

Der Ventilkolben 5 weist im dargestellten Fall über seine axiale Länge l unterschiedliche Abmessungen in radialer Richtung auf. Im dargestellten Fall sind zwei Bereiche geringeren Durchmessers d, hier mit 12 und 13 bezeichnet, vorgesehen. Der Wechsel zwischen den Bereichen größeren und geringeren Durchmessers d führt zur Ausbildung der Steuerkanten 14, 15 und 16 am Ventilkolben 5. Die Steuerkanten 14, 15 und 16 des Ventilkolbens 5 und die Steuerkanten des Ventilgehäuses 3 haben einen besonderen Einfluß auf die Genauigkeit der Steuervorgänge. Diese beeinflussen die Drosselung der Durchgangsquerschnitte und damit die Geschwindigkeit der Arbeitsgeräte bzw. der der Ventileinrichtung in Form eines Proportional-Wegeventils 1 nachgeordneten Verbraucher. Die Kammern 9, 10 und 11 bilden dabei mit der zentralen Bohrung 4 und der äußeren Kontur des Ventilkolbens 5 veränderliche Druckräume. Durch entsprechende Formgebung der einzelnen Steuerkanten werden unterschiedliche Durchflußcharakteristiken erzielt.

Im dargestellten Fall ist eine Ventileinrichtung 1 mit drei Anschlüssen dargestellt. Der Verbindungskanal 6 dient dabei der Verbindung zwischen dem von der Kammer 9 und der zentralen Bohrung 4 gebildeten Druckraum wenigstens mittelbar mit einer Druckmittelversorgungsquelle. Der Verbindungskanal 7 dient zur Verbindung des von der Kammer 10 und der zentralen Bohrung 4 gebildeten Druckraumes mit einem hier im einzelnen nicht dargestellten Verbraucher.

Der Ventilkolben 5 weist einen Innenraum 20 auf, welcher sich in axialer Richtung in Richtung des Ventilkolbens 5 bis zu dessen Stirnseite 22 erstreckt. In diesem Innenraum 20 ist ein in axialer Richtung bewegbarer Ventilstift 21 angeordnet. Der Ventilstift 21 kann dabei unterschiedliche Stellungen einnehmen, insbesondere kann dieser vollständig im Ventilkolben 5 integriert werden oder aber aus dem Ventilkolben 5 hinausragen, d.h. er erstreckt sich in axialer Richtung über die Stimseite 22 des Ventilkolbens 5. Damit der Ventilstift 21 nicht aus dem Innenraum 20 des Ventilkolbens 5 hinausrutscht, ist dieser im Bereich seiner von der Stirnseite 22 des Ventilkolbens 5 gegenüberliegenden und wegweisenden Stirnseite 23 mit einem Vorsprung versehen. Dieser Vorsprung kann entweder als separates, dem Ventilstift 21 zugeordnetes Bauteil ausgeführt sein, beispielsweise in Form eines Aufsteck-, Preß- oder schraubbaren Elementes, vorzugsweise in Form eines Ringes oder der Ventilstift 21 kann derart ausgebildet werden, daß dieser als einteiliges Bauteil mit entsprechendem Vorsprung ausgeführt wird. Dabei ist wenigstens ein sich in Umfangsrichtung erstreckender Vorsprung vorgesehen oder aber eine Vielzahl von in bestimmten Abständen in Umfangsrichtung angeordneten Vorsprüngen.

Des weiteren ist der Innenraum 20 in zwei Bereiche unterschiedlichen Durchmessers unterteilt - einen ersten Bereich größeren Durchmessers, hier mit 24 bezeichnet, und einen zweiten Bereich geringeren Durchmessers, hier mit 26 bezeichnet. Der Bereich geringeren Durchmessers 26 dient dabei der Aufnahme und Führung des Ventilstiftes 21. Im Bereich größeren Durchmessers 25 ist eine Energiespeichereinheit 27 in Form einer Druckfeder angeordnet.

Auf der der Stelleinrichtung, hier dem Elektromagneten 2, abgewandten Stirnseite 22 des Ventilkolbens 5 ist im sich daran anschließenden Bereich der zentralen Bohrung 4 ein axial bewegbarer Anschlag 28 vorgesehen, an welchem die Stirnfläche oder wenigstens ein Teil der Stirnfläche 30 des Ventilstiftes 21 angreift, wobei der Anschlag 28 sich an einer Energiespeichereinheit 31, hier einer Druckfedereinrichtung abstützt.

Die vorliegende Ausführung weist zwei Grenzstellungen auf. Die erste Grenzstellung ist in der Figur 1a dargestellt. In diesem, stromlosen Zustand, ist der mit dem Verbindungskanal 7, dem Ablaufkanal, wenigstens mittelbar koppelbare Verbraucher entlastet und die Druckzufuhr über den Verbindungskanal 6 als Zuführkanal gesperrt. Dies wird dadurch bewirkt, daß die Steuerkanten 14 bis 16 den Druckraum, welcher von der Kammer 9 und der zentralen Bohrung 4 gebildet wird, nicht mit dem entsprechenden Druckraum, welcher mit dem Verbraucher koppelbar ist, verbindet. Der Ablaufkanal, d.h. die Verbindungsleitung 7 zum Verbraucher ist gesperrt.

In der Figur 1b ist das erfindungsgemäße Proportional-Wegeventil 1 in einer Schaltstellung dargestellt, in welcher es als sogenanntes Proportionalventil arbeitet. Die einen Elektromagneten 2 umfassende Stelleinrichtung umfaßt wenigstens einen Leiter, beispielsweise in Form einer Spule, der dem Eleketromagneten 2 zugeordnet ist und welcher von einem Strom mit der Stromstärke l durchflossen wird. Dieser Stromstärkewert l entspricht dabei einem einzustellenden Sollwert für einen gewünschten am Verbraucher anliegenden und einzustellenden Druckwertes. Die Vorgabe des gewünschten einzustellenden Druckwertes am Verbraucher, der auch als Stelldruck W_{pASoll} bezeichnet wird, kann dabei durch einfache Berechnung oder einfache Zuordnung über in einer Speichereinheit abgelegte Kennlinien oder Tabellen erfolgen. Die nachfolgend beschriebene Möglichkeit ist nicht in der Figur dargestellt und ist nur eine von vielen. Die Druckeinstellung bzw. Druckregelung über die Ventileinrichtung 1 erfolgt dabei beispielsweise in einem ersten, hier nicht dargestellten Regelkreis. Eingangsgrößen eines derartigen Regelkreises sind dabei ein gewünschter, sich am Ausgang, d.h. in der Ablaufleitung einstellender Stelldruck W_{PASOll} sowie ein fortlaufend aktuell ermittelter Istwert des Stelldruckes in der Ausgangsleitung P_{A lst}. Die Ventileinrichtung 1 fungiert dabei als Stellglied zur Einstellung dieses Stelldruckes. Die Stellgröße zur Beeinflussung dieses Stellgliedes ist im vorliegenden Fall die die Position des Ventilkolbens 5 beeinflussende Größe der Magnetkraft F_{Magnet} Die Magnetkraft F_{Magnet} entspricht der erforderlichen Betätigungskraft für die Verschiebung des Ventilkolbens 5 der Ventileinrichtung 1 zur Freigabe der einzelnen Durchflußquerschnitte zwischen den Verbindungskanälen 6, 7 und 8. Die Einstellung der Magnetkraft F_{Magnet} erfolgt dabei über einen weiteren Regelkreis, welcher dem Druckregelkreis unterlagert ist. Eingangsgröße dieses zweiten Regelkreises ist eine vom Druckregler gebildete Führungsgröße für die Magnetkraft F_{Magnet Soll.}

Entsprechend der Größe der Magnetkraft F_{Magnet} wird der Ventilkolben in axialer Richtung relativ zum Ventilstift 21 verschoben, wobei die Druckräume, welche von der Kammer 9 und der zentralen Bohrung 4 bzw. der Kammer 10 und der zentralen Bohrung 4 gebildet werden, miteinander verbunden werden und über diese Verbindung der Druckräume eine Verbindung zwischen dem Zulauf 6 und dem mit dem Verbraucher gekoppelten Verbindungskanal 7 ermöglicht. Über die Verbindung zwischen den Druckräumen, welche von der Kammer bzw. 10 und der zentralen Bohrung 4 gebildet werden, stellt sich im Verbindungskanal 7 ein bestimmter Druck Pₗₛₜ ein. Dieser Druck pflanzt sich über eine Verbindungsbohrung 36, die sich vom Umfang 35 des Ventilkolbens 21 in radialer Richtung in Richtung des Innenraumes 20 erstreckt, bis in den Innenraum 20 fort. Dieser Druck beaufschlagt im Innenraum 20 die von der Stirnseite 23 gebildete Fläche des Ventilstiftes 21. Dabei herrscht immer ein Gleichgewichtszustand, d.h. die Betätigungskraft in Form der Magnetkraft F_{Magnet} entspricht immer der von der Energiespeichereinheit 25 aufgebrachten Kraft plus der Druckkraft F_{Druck}, welche sich aus dem Verbraucherdruck Pₗₛₜ und der Fläche A des Ventilstiftes im Bereich der Stimseite 23 ergibt. Der Ventilstift 21 stützt sich dabei an der vorgespannten Energiespeichereinheit 31 in Form einer als Druckfeder ausgeführten Federeinheit ab. Die Vorspannung der Federeinheit entspricht dabei der Kraft des Ventilstiftes 21 bei maximal gewünschtem proportionalem Druck, so daß im gesamten Proportionalbereich keine Veränderung an der Federeinheit stattfindet.

Sobald der eingestellte Druck Pₗₛₜ in dem mit dem Verbindungskanal 7 wenigstens mittelbar gekoppelten Verbraucher eine Kraft auf dem Ventilstift 21, insbesondere der Fläche A an der Stimseite 23 des Ventilstiftes 21 erzeugt, welche höher ist als die Kraft der vorgespannten Federeinheit 31, drückt der Ventilstift 21 die Federeinheit 31, insbesondere das Federpaket zusammen, bis er mit seiner Schulter S bzw. dem Anschlag im Bereich seines Endes im Ventilkolben 5 zum Anliegen kommt. Sobald dieser Zustand erreicht ist, kann sich der Druck im Verbraucher bzw. der Verbindungsleitung, welche mit dem Verbindungskanal 7 und dem Verbraucher gekoppelt ist, nicht mehr auf die Ventileinrichtung 1 auswirken. Die Lage des Ventilkolbens 5 bestimmt sich nunmehr allein aufgrund der äußeren Kräfte von Magnet, insbesondere des Elektromagneten 2 und der Energiespeichereinheit 31, insbesondere der Federeinheit wie bei einem Wegeventil.

Der Ventilkolben 5 geht nun bei weiterem geringfügigen Ansteigen der Magnetkraft F_{Magnet} in axialer Richtung bis zum Anschlag 28 und gibt den ungedrosselten Weg des Betriebsmittels, insbesondere des Öls zum Verbraucher frei.

Durch das Vorsehen eines Ventilstiftes 21, welcher vom Druck in der Verbindungsleitung 7 beaufschlagt wird, wird der Betätigungskraft auf den Ventilkolben 5 im Proportionalbereich immer eine Gegenkraft zugeordnet, welche bewirkt, daß am Ventilkolben 5 geringere Betätigungskräfte wirksam werden müssen um eine Verschiebung in axialer Richtung zu ermöglichen als bei einer Lösung ohne Ventilstift mit direktem Angriff der Betätigungskraft auf den Ventilkolben.

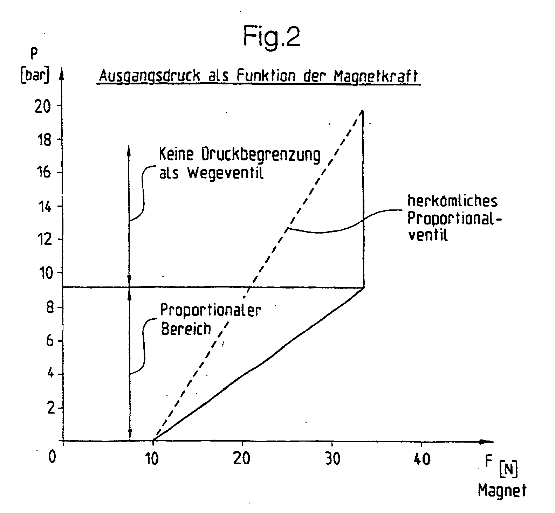

Die Figur 2 verdeutlicht schematisch das Kennfeld eines erfindungsgemäßen Proportional-Wegeventils in einem Diagramm, welches die Abhängigkeit des Ausgangsdruckes bzw. des für den Verbraucher bereitgestellten Druckes im Kanal 7 von der Magnetkraft F_{Magnet} wiedergibt. Zu diesem Zweck ist im Koordinatensystem die Magnetkraft F_{Magnet} in X-Richtung und der Ausgangsdruck Pₗₛₜ in Y-Richtung abgetragen. Zum Vergleich ist mit l die Kennlinie eines herkömmlichen Proportionalventils eingezeichnet. Daraus ist ersichtlich, daß sich der Druck Pₗₛₜ in Abhängigkeit der Magnetkraft F_{Magnet} linear ändert. Die erfindungsgemäße Lösung ermöglicht es demgegenüber, wie auch in der Kennlinie ll dargestellt, den proportionalen Bereich breiter zu gestalten, d.h. den Anstieg der Kennlinie geringer zu halten, wobei sich an den proportionalen Bereich der sogenannte Wegbereich anschließt, indem keine Druckbegrenzung erfolgt. Diese Verbreiterung des proportionalen Bereiches über einen größeren Magnetkraftbereich F_{Magnet} ermöglicht es, den am Verbraucher einzustellenden Druck feiner entsprechend der aufgebrachten Magnetkraft F_{Magnet} abzustimmen.

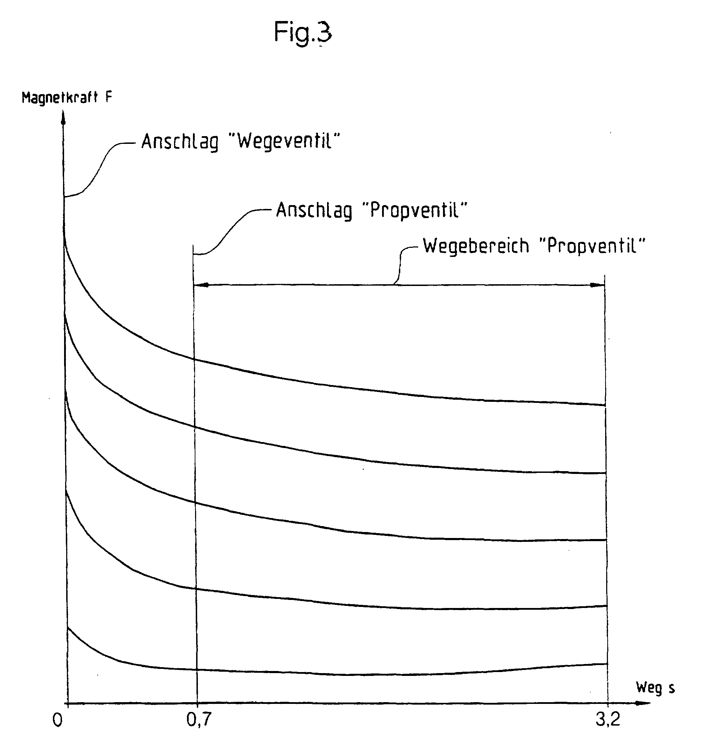

Die Figur 3 verdeutlicht anhand eines Diagrammes die Kennlinien für die erforderliche Magnetkraft der Betätigungseinrichtung gemäß einer Weiterentwicklung des erfindungsgemäßen Grundgedankens, wobei die Betätigungskraft elektro-magnetisch aufgebracht wird. Die Stelleinrichtung umfaßt dazu wenigstens einen Elektromagneten mit einer Spule und einem Magnetanker, wobei der Anker unter der Wirkung des von der Spule erzeugten Magnetfeldes beweglich ist. Aus der unterschiedlichen Nutzung der Magnetkraftkennlinie in den einzelnen Funktionszuständen "Proportionalventil" und "Wegeventil" ergibt sich die Möglichkeit, die Bestromung der Magnetspule im Zustand "Wegeventil" zu verringern. Die Verringerung der Bestromung der Magnetspule ist besonders vorteilhaft, da der zweite Teil des Gesamtarbeitsbereiches, die Funktion als Wegeventil, in der Regel den größten Zweitanteil besitzt und für die Erwärmung und Haltbarkeit der Spule sowie für die Hardware der Steuerung die größte Bedeutung besitzt. Dies wird durch unterschiedliche Wegbegrenzungen erzielt, so daß, wie beispielsweise dargestellt, im Funktionszustand "Proportionalventil" der Wegbereich 3,2 bis 0,7 und im Zustand "Wegeventil" der Anschlag bei Weg 0 genutzt wird. Mit Weg ist dabei beispielsweise der vom Magnetanker zurückgelegte Weg bzw. der Weg des mit diesem gekoppelten Ventilkolbens gemeint. Durch die gezielte Überhöhung der Magnetkräfte in dieser Anschlagstellung kann die Bestromung der Magnetspule deutlich abgesenkt werden, ohne daß für den Betrieb als Proportionalventil Nachteile entstehen.

In Figur 3 ist ersichtlich, daß im ersten Teil des Gesamtarbeitsbereiches, dem Funktionszustand Proportionalventil, ein weitestgehend konstanter Verlauf der Magnetkraft, nur abhängig von der Bestromung der Spule, realisiert wird, während im zweiten Teil, dem Funktionszustand "Wegeventil" ein kräftiger Anstieg der Magnetkräfte zu verzeichnen ist.

Konstruktiv werden diese Begrenzungen beispielsweise dadurch gelöst, daß die Hubbegrenzung für die Funktion "Proportionalventil" durch das vorgespannte Federpaket des Ventils realisiert wird, während im Zustand Wegeventil beispielsweise ein zweiter Anschlag in der Magnetspule wirksam wird. Das Federpaket des Ventiles übt auf den Ventilstift eine zur Kraft, welche aus dem Druck im Ablaufkanal auf die Stirnfläche des Ventilstiftes gebildet wird, entgegengerichtete Kraft aus.

Wie im Diagramm ersichtlich, beträgt der Wegebereich des Ventilkolbens im ersten Teil des Gesamtarbeitsbereiches, dem Zustand "Proportionalventil" ca. 80% oder mehr und im zweiten Teilarbeitsbereich , dem Zustand "Wegeventil" ca. 20% oder weniger des Gesamtwegebereiches. Kleinere Abweichungen von diesen Werten sind denkbar.

Im Funktionszustand Proportionalventil befindet sich die Steuerstellung des Ventilkolbens meist in der Mitte des Wegebereiches des Ventilkolbens. Beim Einsteuern, z.B. nach Füllvorgängen muß der Druckverlauf unabhängig von der vorangegengenen Position des Steuerschiebers sein. Dies bedeutet, daß der Druckverlauf sich von unten auf den gewünschten wert ohne Drucküberhöhungen beim Übergang Füllen-Steuern einstellt.

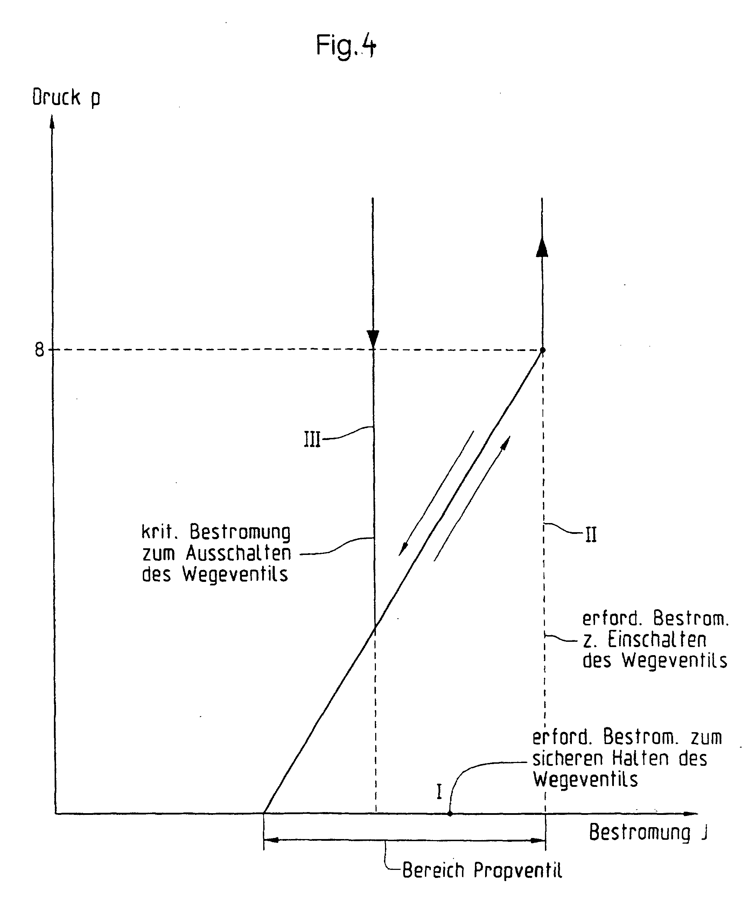

Figur 4 verdeutlicht den Verlauf der Druckkennlinie über der Bestromung für die Funktionen "Proportionalventil" und "Wegeventil". Darin kennzeichnet l den Bereich der erforderlichen Bestromung der Magnetspule zum sicheren Halten des Wegeventiles, II die erforderliche Bestromung zum Einschalten des Wegeventiles und lll die Kennlinie für die kritische Bestromung zum Ausschalten des Wegeventiles.

Beim Einsatz der Ventileinrichtung in Schaltgetrieben ist die Ventileinrichtung im Funktionszustand Proportionalventil in wenigstens zwei Bereichen wirksam:
a) beim Füllen
b) beim Synchronisiervorgang
Für den Füllvorgang ist einbestimmter Angfangsdruck vorgebbar. Der Füllvorgang selbst kann

a) gesteuert oder
b) ungesteuert erfolgen.
Im erst genannten Fall befindet sich der Ventilkolben während der Füllperiode am Anschlag , beispielsweise in Bezug auf Fig. 3, am Anschlag 0,7.
Beim gesteuerten Füllvorgang befindet sich der Ventilkolben während des Füllvorganges bereits in der Steuerstellung.

Für den Synchronisiervorgang geht die Ventileinrichtung vom Anschlag in die Steuerstellung oder bleibt in der selben. Es ist dann möglich beliebige aufoder absteigende Drücke einzustellen.

Zum Steuern nach der Synchronisation:
Durch eine kurzzeitige stärkere Bestromung wird das Ventil sicher in den Zustand Wegeventil gebracht. Die Magnetspule geht dabei in stellung Null, die Druckbeeinflussung des ventiles schaltet ab. Anschließend kann die Bestromung aufgrund der angestiegenen Magnetkräfte in der Stellung Null auf einen geringen Haltestrom abgesenkt werden.

## Patentansprüche

1. Poportionalwegeventileinrichtung (1)
1.1 mit einem Ventilgehäuse (3) mit wenigstens einem Zulaufkanal (6) und einem Ablaufkanal (7);
1.2 mit einem, im Ventilgehäuse (3) axial bewegbaren und Steuerkanten (14, 15, 16) aufweisenden Ventilkolben (5) zum Freigeben und Absperren der Verbindung der Querschnitte von Zulauf- (6) und Ablaufkanal (7);
1.3 mit einer Stelleinrichtung zur Beaufschlagung des Ventilkolbens (5) mit einer Betätigungskraft;
1.4 es sind Mittel zur Erzeugung einer der Betätigungskraft über wenigstens einen ersten Teil des Gesamtarbeitsbereiches der Ventileinrichtung (1), in Abhängigkeit zum Druck im Ablaufkanal (7) entgegengerichtete Kraft vorgesehen, umfassend
1.4.1 einen, im Ventilkolben (5) angeordneten Innenraum (20);
1.4.2 einen, wenigstens zum Teil im Innenraum (20) angeordneten Ventilstift (21), wobei Ventilstift (21) und Ventilkolben (5) relativ gegeneinander in axialer Richtung bewegbar sind;
1.4.3 einen Verbindungkanal (36) zwischen dem Innenraum (20) des Ventilkolbens (5) und dem äußeren Umfang des Ventilkolbens (5), wobei die Mündung des Verbindungskanales (36) am äußeren Umfang des Ventilkolbens (5) derart angeordnet ist, daB diese mit dem Ablaufkanal (7) im ersten Teil des Gesamtarbeitsbereiches wenigstens mittelbar in Verbindung steht und den Ventilstift (21) mit dem Druck im Ablaufkanal (7) beaufschlagt;
1.4.4 eine, eine auf den Ventilstift (21) im Ventilgehäuse (3) eine zur Betätigungskraft und/oder Kraft auf den Ventilstift (21) entgegengerichteten Kraft ausübende Energiespeichereinrichtung (31, F2);
1.4.5 einen, dem Ventilstift (21) im Ventilgehäuse (3) zugeordneten verschiebbaren Anschlag (28) zur Begrenzung der axialen Bewegung in Wirkungsrichtung der durch den Druck im Ablaufkanal bestimmbaren und auf den Ventilstift (21) wirkenden Kraft, welcher an der Energiespeichereinrichtung (31, F2) abgestützt ist;
**gekennzeichnet durch** das folgende Merkmal:
- der Ventifstift (21) weist in seinem, im Innenraum (20) angeordneten Bereich am Umfang wenigstens einen Vorsprung (S) auf, welchem ein Anschlag im Ventilkolben (5) zugeordnet ist,
wobei im ersten Teil des Gesamtarbeitsbereiches der Ventilkolben (5) in axialer Richtung verschoben wird und in einem zweiten Teil des Gesamtarbeitsbereiches sowohl der Ventilstift (21) bis zum Anschlag im Ventilkolben (5) und der Ventilkolben (5) in axialer Richtung verschoben werden.

2. Ventileinrichtung (1) nach Anspruch 1, **dadurch gekennzeichnet, daß** die Mittel des weiteren eine im Innenraum (20) des Ventilkolbens (5) zwischen Ventilkolben (5) und Ventilstift (21) angeordnete Energiespeichereinrichtung (F1) umfassen.

3. Ventileinrichtung (1) nach einem der Ansprüche 1 oder 2, **dadurch gekennzeichnet, daß** die Mittel eine direkt proportional zum Druck im Ablaufkanal (7) ausgebildete und entgegengerichtete Kraft erzeugen.

4. Ventileinrichtung (1) nach einem der Ansprüche 1 bis 3, **dadurch gekennzeichnet, daß** die Energiespeichereinheit (31, F2, F1) wenigstens eine Druckfedereinheit umfassen.

5. Ventileinrichtung (1) nach einem der Ansprüche 1 bis 3, **dadurch gekennzeichnet, daß** die Energiespeichereinheit (31, F2, F1) elastische Membranen umfassen.

6. Ventileinrichtung (1) nach einem der Ansprüche 1 bis 4, **dadurch gekennzeichnet, daß** der Ventilstift (21) und der Innenraum (20) des Ventilkolben (5) einen kreisrunden Querschnitt aufweisen.

7. Ventileinrichtung (1) nach einem der Ansprüche 1 bis 6, **dadurch gekennzeichnet, daß** die Stelleinrichtung als elektromechanische Stelleinrichtung ausgeführt ist.

8. Ventileinrichtung (1) nach einem der Ansprüche 1 bis 6, **dadurch gekennzeichnet, daß** die Stelleinrichtung als hydraulische Stelleinrichtung ausgeführt ist

9. Ventileinrichtung (1) nach einem der Ansprüche 1 bis 6, **dadurch gekennzeichnet, daß** die Stelleinrichtung als elektromagnetische Stelleinrichtung (2), umfassend einen Elektromagneten mit zugeordnetem Leiter, ausgeführt ist

10. Ventileinrichtung (1) nach Anspruch 9, **gekennzeichnet durch** die folgenden Merkmale,;
10.1 die elektromagnetisch wirkende Stelleinrichtung (2) umfaßt wenigstens einen Elektromagneten mit einer Spule und einem Anker, welcher unter der Wirkung des von der Spule erzeugbaren Magnetfeldes bewegbar ist und wenigstens mittelbar mit dem Ventilkolben (5) gekoppelt ist;
10.2 dem Magnetanker sind für die einzelnen Teilbereiche des Gesamtarbeitsbereiches jeweils eine Hubbegrenzung wenigstens mittelbar zugeordnet - eine erste Hubbegrenzung und eine zweite Hubbegrenzung, wobei die erste Hubbegrenzung für den ersten Teil des Gesamtarbeitsbereiches in einem Bereich zwischen 70 und ca. 80% Hub und die zweite Hubbegrenzung in einem Bereich zwischen 70 bzw. 80 und 100% wirksam wird.

11. Ventileinrichtung (1) nach Anspruch 10, **dadurch gekennzeichnet, daß** die erste Hubbegrenzung über die Federeinrichtung (F1) und die zweite Hubbegrenzung über einen, dem Magnetanker zugeordneten Anschlag realisiert wird.

12. Ventileinrichtung (1) nach einem der Ansprüche 1 bis 11, **dadurch gekennzeichnet, daß** die Vorspannung der Energiespeichereinrichtung (31, F2) der Kraft auf den Steuerstift (21) bei einem bestimmten Maximal-Proportionaldruck entspricht

13. Ventilgrundbaueinheit
13.1 mit einem Ventilgehäuse (3) mit wenigstens einem Zulaufkanal (6) und einem Ablaufkanal (7);
13.2 mit einem, im Ventilgehäuse (3) axial bewegbaren und Steuerkanten aufweisenden Ventilkolben (5) zum Freigeben und Absperren der Verbindung der Querschnitte von Zulauf- (6) und Ablaufkanal (7);
13.3 mit einer Stelleinrichtung zur Beaufschlagung des Ventilkolbens (5) mit einer Betätigungskraft;
13.4 mit einem, im Ventilkolben (5) angeordneten und sich bis zu dessen von der Stelleinrichtung abgewandten Stirnseite erstreckenden Innenraum (20);
13.5 mit einem, wenigstens zum Teil im Innenraum (20) angeordneten Ventilstift (21), wobei Ventilstift (21) und Ventilkolben (5) relativ gegeneinander in axialer Richtung bewegbar sind;
13.6 mit einen Verbindungkanal (36) zwischen dem Innenraum (20) des Ventilkolbens (5) und dem äußeren Umfang des Ventilkolbens (5), wobei die Mündung des Verbindungskanales (36) am äußeren Umfang des Ventilkolbens (5) derart angeordnet ist, daß diese mit dem Ablaufkanal (7) wenigstens mittelbar in Verbindung steht und den Ventilstift (21) mit dem Druck im Ablaufkanal (7) beaufschlagt;
13.7 mit einem, dem Ventilstift (21) im Ventilgehäuse (3) zugeordneten Anschlag (28);
**gekennzeichnet durch** das folgende Merkmal:
13.8 der Ventilstift (21) weist in seinem, im Inneraum angeordneten Bereich am Umfang wenigstens einen Vorsprung auf, welchem ein Anschlag im Ventilkolben (5) zugeordnet ist.

14. Ventilgrundbaueinheit nach Anspruch 13, **gekennzeichnet durch** das folgende Merkmal:
14.1 mit einer, dem Anschlag (28) im Ventilgehäuse (3) und dem Ventilstift (21) zugeordnete Energiespeichereinrichtung (31, F2) zur wenigstens mittelbaren Abstützung des Ventilstiftes (21).

15. Ventilgrundbaueinheit nach einem der Ansprüche 13 oder 14 **gekennzeichnet durch** folgende Merkmale:
15.1 im Innenraum (20) des Ventilkolbens (5) ist eine weitere Energiespeichereinrichtung zur Erzeugung einer weiteren zur Betätigungskraft entgegengerichteten zweiten Kraft angeordnet;
15.2 die weitere Energiespeichereinrichtung ist zwischen der Innenwand des Innenraums (20) und dem Ventilstift (21) zur Erzeugung einer weiteren zur Betätigungskraft entgegengerichteten zweiten Kraft angeordnet.

16. Ventilgrundbaueinheit nach einem der Ansprüche 13 bis 15, **dadurch gekennzeichnet, daß** die Energiespeichereinrichtungen in Form von Druckfedereinheiten ausgeführt sind.

17. Ventilgrundbaueinheit nach einem der Ansprüche 13 bis 16, **dadurch gekennzeichnet, daß** die Energiespeichereinrichtungen in Form von elastischen Membranen ausgeführt sind.

18. Ventilgrundbaueinheit nach einem der Ansprüche 13 bis 17, **dadurch gekennzeichnet, daß** die durch die dem Anschlag zugeordnete Energiespeichereinrichtung derart gewählt ist, daß in Einbaulage die erzeugbare Abstützkraft der Kraft des Ventilstiftes bei gewünschtem maximalen Proportionaldruck entspricht.

## Claims

1. Proportional-direction control valve device (1)
1.1 comprising a valve housing (3) with at least one feed duct (6) and one discharge duct (7);
1.2 comprising a valve piston (5) which is axially movable in the valve housing (3) and has control edges (14, 15, 16) , for releasing and locking the connection of the cross-sections of the feed duct (6) and discharge duct (7) ;
1.3 comprising an adjusting device for loading the valve piston (5) with an actuating force;
1.4 means are provided for generating a force counter to the actuating force via at least one first part of the total operating range of the valve device (1) , as a function of the pressure in the discharge duct (7), comprising
1.4.1 a cavity (20) arranged in the valve piston (5) ;
1.4.2 a valve pin (21) arranged at least partly in the cavity (20), wherein the valve pin (21) and valve piston (5) are movable relative to one another in the axial direction ;
1.4.3 a connecting duct (36) between the cavity (20) of the valve piston (5) and the outer periphery of the valve piston (5) , wherein the mouth of the connecting duct (36) on the outer periphery of the valve piston (5) is arranged in such a way that it communicates with the discharge duct (7) in the first part of the total operating range at least indirectly and loads the valve pin (21) with the pressure in the discharge duct (7) ;
1.4.4 an energy storage device (31, F2) exerting a force on the valve pin (21) in the valve housing (3) counter to the actuating force and/or force on the valve pin (21);
1.4.5 a displaceable stop (28) associated with the valve pin (21) in the valve housing (3) for limiting the axial movement in the direction of action of the force, which force can be determined by the pressure in the discharge duct end acts on the valve pin (21) which is supported on the energy storage device (31, F2);
**characterised by** the following feature:
- the valve pin (21) comprises at least one projection (S) on the periphery in its region arranged in the cavity (20), a stop in the valve piston (5) being associated with this projection (S) , the valve piston (5) being displaced in the axial direction in the first part of the total operating range, and both the valve pin (21) up to the stop in the valve piston (5) and the valve piston (5) being displaceable in the axial direction in a second part of the total operating range.

2. Valve device (1) according to claim 1, **characterised in that** the means further comprise an energy storage device (F1) arranged in the cavity (20) of the valve piston (5) between the valve piston (5) and the valve pin (21).

3. Valve device (1) according to either of claims 1 or 2, **characterised in that** the means generate a force which is directly proportional to and counter to the pressure in the discharge duct (7).

4. Valve device (1) according to any one of claims 1 to 3, **characterised in that** the energy store units (31, F2, F1) comprise at least one compression spring unit.

5. Valve device (1) according to any one of claims 1 to 3, **characterised in that** the energy store units (31, F2, F1) comprise resilient membranes.

6. Valve device (1) according to any one of claims 1 to 4, **characterised in that** the valve pin (21) and the cavity (20) of the valve piston (5) have a circular cross-section.

7. Valve device (1) according to any one of claims 1 to 6, **characterised in that** the adjusting device is designed as an electromechanical adjusting device.

8. Valve device (1) according to any one of claims 1 to 6, **characterised in that** the adjusting device is designed as a hydraulic adjusting device.

9. Valve device (1) according to any one of claims 1 to 6, **characterised in that** the adjusting device is designed as an electromagnetic adjusting device (2) comprising an electromagnet with an associated conductor.

10. Valve device (1) according to claim 9, **characterised by** the following features:
10.1 the electromechanically acting adjusting device (2) comprises at least one electromagnet with a coil and an armature which can be moved by the action of the magnetic field which can be generated by the coil, and is at least indirectly coupled to the valve piston (5) ;
10.2 a respective travel limit - a first travel limit and a second travel limit - is at least indirectly associated with the magnetic armature for the individual partial ranges of the total operating range, the first travel limit for the first part of the total operating range being active in a range between 70 and about 80% travel and the second travel limit in a range between 70 or 80 and 100%.

11. Valve device (1) according to claim 10, **characterised in that** the first travel limit is produced via the spring device (F1) and the second travel limit is produced via a stop associated with the magnetic armature.

12. Valve device (1) according to any one of claims 1 to 11, **characterised in that** the bias of the energy storage device (31, F2) corresponds to the force on the control pin (21) in the case of a specific maximum proportional pressure.

13. Base valve unit
13.1 comprising a valve housing (3) with at least one feed duct (6) and a discharge duct (7);
13.2 comprising a valve piston (5) which is axially movable in the valve housing (3) and has control edges for releasing and locking the connection of the cross-sections of the feed duct (6) and discharge duct (7);
13.3 comprising an adjusting device for loading the valve piston (5) with an actuating force;
13.4 comprising a cavity (20) arranged in the valve piston (5) and extending to the end face thereof remote from the adjusting device;
13.5 comprising a valve pin (21) arranged at least partly in the cavity (20), wherein the valve pin (21) and valve piston (5) are movable relative to one another in the axial direction;
13.6 comprising a connecting duct (36) between the cavity (20) of the valve piston (5) and the outer periphery of the valve piston (5), wherein the mouth of the connecting duct (36.) is arranged on the outer periphery of the valve piston (5) in such a way that it communicates at least indirectly with the discharge duct (7) and loads the valve pin (21) with the pressure in the discharge duct (7) ;
13.7 comprising a stop (28) associated with the valve pin (21) in the valve housing (3);
**characterised by** the following feature:
13.8 the valve pin (21) comprises at least one projection on the periphery in its region arranged in the cavity, a stop in the valve piston (5) being associated with this projection.

14. Base valve unit according to claim 13, **characterised by** the following feature:
14.1 comprising an energy storage device (31, F2) associated with the stop (28) in the valve housing (3) and the valve pin (21) for at least indirect support of the valve pin (21).

15. Base valve unit according to either of claims 13 or 14, **characterised by** the following features:
15.1 in the cavity (20) of the valve piston (5) is arranged a further energy storage device for generating a further second force counter to the actuating force;
15.2 the further energy storage device is arranged between the inner wall of the cavity (20) and the valve pin (21) to generate a further second force counter to the actuating force.

16. Base valve unit according to any one of claims 13 to 15, **characterised in that** the energy storage devices are designed in the form of compression spring units.

17. Base valve unit according to any one of claims 13 to 16, **characterised in that** the energy storage devices are designed in the form of resilient membranes.

18. Base valve unit according to any one of claims 13 to 17, **characterised in that** the energy storage device associated with the stop is selected in such a way that in the installed position the supporting force which can be generated corresponds to the force of the valve pin at the desired maximum proportional pressure.

## Revendications

1. Dispositif valve à actions combinées de commandes proportionnelle et/ou de distribution (1)
1.1 avec une cage de soupape (3) comportant au moins un canal d'arrivée (6) et un canal de décharge (7) ;
1.2 avec un piston soupape (5) mobile axialement dans la cage de soupape (3) et muni d'arêtes pilotes (14, 15, 16), destinées à libérer et arrêter le débouché des sections des canaux d'arrivée (6) et de décharge (7) ;
1.3 avec un dispositif de réglage destiné à solliciter le piston soupape (5) par une force d'actionnement;
1.4 il est prévu des moyens pour produire une force dirigée dans le sens inverse de la force d'actionnement sur au moins une première partie de la zone de travail totale du dispositif valve (1), en fonction de la pression présente dans le canal de décharge (7), comportant
1.4.1 un espace intérieur (1) ménagé dans le piston soupape (5) ;
1.4.2 une tige de soupape (21) agencée au moins partiellement dans l'espace intérieur (20), la tige de soupape (21) et le piston soupape (5) étant mobiles l'un par rapport à l'autre en direction axiale ;
1.4.3 un canal de raccordement (36) entre l'espace intérieur (20) du piston soupape (5) et le pourtour extérieur du piston soupape (5), l'ouverture du canal de raccordement (36) sur le pourtour extérieur du piston soupape (5) étant disposée en sorte que celle-ci soit au moins indirectement en liaison avec le canal de décharge (7) dans la première partie de la zone de travail totale et sollicite la tige de soupape (21) avec la pression qui règne dans le canal de décharge (7);
1.4.4 un dispositif d'accumulation d'énergie (31, F2) exerçant sur la tige de soupape (21) dans la cage de soupape (3). une force opposée à la force d'actionnement et/ou à la force exercée sur la tige de soupape (21) ;
1.4.5 une butée mobile (28) associée à la tige de soupape (21) dans la cage de soupape (3), destinée à limiter le mouvement axial dans la direction d'action de la force déterminable par la pression dans le canal de décharge et agissant sur la tige de soupape (21), laquelle butée prend appui sur le dispositif d'accumulation d'énergie (31, F2) ;
**caractérisé par** la disposition suivante :
la tige de soupape (21) présente sur le pourtour de sa zone disposée dans l'espace intérieur (20) au moins une saillie (S) à laquelle est associée une butée dans le piston soupape (5) ,
où dans la première partie de la zone de travail totale, le piston soupape (5) est déplacé dans la direction axiale et dans une deuxième partie de la zone de travail totale, le déplacement en direction axiale se poursuit et pour la tige de soupape (21) jusqu'à la butée dans le piston soupape (5) et pour le piston soupape (5).

2. Dispositif valve (1) selon la revendication 1, **caractérisé en ce que** les moyens précités comprennent en outre un dispositif d'accumulation d'énergie (F1) placé dans l'espace intérieur (20) du piston soupape (5) entre le piston soupape (5) et la tige de soupape (21).

3. Dispositif valve (1) selon l'une des revendications 1 ou 2, **caractérisé en ce que** lesdits moyens produisent une force directement proportionnelle à la pression dans le canal de décharge (7)et opposée à celle-ci.

4. Dispositif valve (1) selon l'une des revendications 1 à 3, **caractérisé en ce que** les unités d'accumulation d'énergie (31, F2, F1) comprennent au moins une unité à ressort de pression.

5. Dispositif valve (1) selon l'une des revendications 1 à 3, **caractérisé en ce que** les unités d'accumulation d'énergie (31, F2, F1) comprennent des membranes élastiques.

6. Dispositif valve (1) selon l'une des revendications 1 à 4, **caractérisé en ce que** la tige de soupape (21) et l'espace intérieur (20) du piston soupape (5) présentent une section circulaire.

7. Dispositif valve (1) selon l'une des revendications 1 à 6, **caractérisé en ce que** le dispositif de réglage est réalisé sous la forme d'un dispositif de réglage électromécanique.

8. Dispositif valve (1) selon l'une des revendications 1 à 6 , **caractérisé en ce que** le dispositif de réglage est réalisé sous la forme d'un dispositif de réglage hydraulique.

9. Dispositif valve (1) selon l'une des revendications 1 à 6, **caractérisé en ce que** le dispositif de réglage est réalisé sous la forme d'un dispositif de réglage élèctromagnétique (2), comportant un électro-aimant avec un conducteur affecté.

10. Dispositif valve (1) selon la revendication 9, **caractérisé par** les dispositions suivantes :
10.1 le dispositif de réglage électromagnétique (2) comprend au moins un électro-aimant avec une bobine et une armature qui est mobile sous l'effet du champ magnétique que peut produire la bobine et est couplée au moins indirectement avec le piston soupape (5) ;
10.2 à l'armature de l'aimant, sont affectés au moins indirectement pour les différentes zones partielles de la zone de travail totale, à chaque fois un dispositif limiteur de course, - un premier limiteur et un deuxième limiteur de course - , le premier limiteur de course agissant pour la première partie de la zone de travail totale dans une plage située entre 70 et environ 80 % de la course et le deuxième limiteur dans une plage située entre 70, voire 80, et 100 %.

11. Dispositif valve (1) selon la revendication 10, **caractérisé en ce que** le premier limiteur de course est réalisé par l'intermédiaire du dispositif à ressort (F1) et le deuxième limiteur de course par l'intermédiaire d'une butée associée à l'armature de l'aimant.

12. Dispositif valve (1) selon l'une des revendications 1 à 11, **caractérisé en ce que** la tension initiale du dispositif d'accumulation d'énergie (31, F2) correspond à la force exercée sur la tige de commande (21) à, une pression proportionnelle maximale déterminée.

13. Unité de base à soupape
13.1 avec une cage de soupape (3) comportant au moins un canal d'arrivée (6) et un canal de décharge (7) ;
13.2 avec un piston soupape (5) mobile axialement dans la cage de soupape (3) et muni d'arêtes pilotes (14, 15, 16) destinées à libérer et arrêter le débouché des sections des canaux d'arrivée (6) et de décharge (7) ;
13.3 avec un dispositif de réglage destiné à solliciter le piston soupape (5) par une force d'actionnement ;
13.4 avec un espace intérieur (20) agencé dans le piston soupape (5) et s'étendant jusqu'à la face frontale de ce dernier, dirigée dans le sens opposé à celui du dispositif de réglage ;
13.5 avec une tige de soupape (.21) agencée au moins partiellement dans l'espace intérieur (20), la tige de soupape (21) et le piston soupape (5) étant mobiles l'un par rapport à l'autre, dans la direction axiale ;
13.6 avec un canal de raccordement (36) entre l'espace intérieur (20) du piston soupape (5) et le pourtour extérieur du piston soupape (5), l'ouverture du canal de raccordement (36) sur le pourtour extérieur du piston soupape (5) étant disposée en sorte que celle-ci soit au moins indirectement en liaison avec le canal de décharge (7) dans la première partie de la zone de travail totale et sollicite la tige de soupape (21) avec la pression qui règne dans le canal de décharge (7);
13.7 avec une butée associée à la tige de soupape (21) dans la cage de soupape (3) ;
**caractérisée par** la disposition suivante :
13.8 la tige de soupape (21) présente sur le pourtour de sa zone agencée dans l'espace intérieur (20), au moins une saillie (S) à laquelle est associée une butée dans le piston soupape (5).

14. Unité de base à soupape selon la revendication 13, **caractérisée par** la disposition suivante :
14.1 avec un dispositif d'accumulation d'énergie (31, F2) associé à la butée (28) dans le piston soupape (3) et à la tige de soupape (21), destiné à supporter au moins indirectement la tige de soupape (21).

15. Unité de base à soupape selon l'une des revendications 13 ou 14, **caractérisée par** les dispositions suivantes :
15.1 dans l'espace intérieur (20) du piston soupape (5), on a agencé un dispositif d'accumulation d'énergie supplémentaire destiné à produire une deuxième force supplémentaire dirigée dans le sens inverse de celui de la force d'actionnement
15.2 le dispositif d'accumulation d'énergie supplémentaire est agencé entre la paroi intérieure de l'espace intérieur (20) et la tige de soupape (21) pour produire une deuxième force supplémentaire dirigée dans le sens opposé à celui de la force d'actionnement.

16. Unité de base à soupape selon l'une des revendications 13 à 15, **caractérisée en ce que** les dispositifs d'accumulation d'énergie sont réalisés sous la forme d'unités à ressorts de pression.

17. Unité de base à soupape selon l'une des revendications 13 à 16, **caractérisée en ce que** les dispositifs d'accumulation d'énergie sont réalisés sous la forme de membranes élastiques.

18. Unité de base à soupape selon l'une des revendications 13 à 17, **caractérisée en ce que** le dispositif d'accumulation d'énergie associé à la butée, est choisi de sorte qu'en position montée, la force d'appui pouvant être produite corresponde à la force de la tige de soupape, à la pression proportionnelle maximale souhaitée.
